(19) Europäisches Patentamt
European Patent Office
Office européen des brevets

(11) **EP 1 995 931 A2**

(12) **DEMANDE DE BREVET EUROPEEN**

(43) Date de publication:
26.11.2008 Bulletin 2008/48

(51) Int Cl.:
*H04L 29/06* (2006.01)

(21) Numéro de dépôt: 08156734.9

(22) Date de dépôt: 22.05.2008

(84) Etats contractants désignés:
AT BE BG CH CY CZ DE DK EE ES FI FR GB GR
HR HU IE IS IT LI LT LU LV MC MT NL NO PL PT
RO SE SI SK TR
Etats d'extension désignés:
AL BA MK RS

(30) Priorité: 24.05.2007 FR 0755245

(71) Demandeur: France Télécom
75015 Paris (FR)

(72) Inventeurs:
• Toutain, François
22700, LOUANNEC (FR)
• Bouille, Philippe
22560, PLEUMEUR BODOU (FR)
• Collin, Guillaume
22290, GOUDELIN (FR)

(74) Mandataire: Desormiere, Pierre-Louis et al
Cabinet Beau de Loménie,
158, rue de l'Université
75340 Paris Cedex 07 (FR)

(54) **Système et procédé de mise a jour d'un etat de presence d'un utilisateur sur un terminal par agregation d'informations multi-sources**

(57) L'invention concerne un procédé de mise à jour d'un état de présence d'un utilisateur sur au moins un terminal connecté à un réseau de télécommunications, à partir d'informations d'état de présence fournies par au moins une source d'état dudit terminal, ledit procédé étant caractérisé en ce que ledit état de présence est déterminé lors d'une étape d'agrégation comprenant :
- la collecte d'une pluralité de valeurs de probabilité de présence unitaire ($V_i,...,V_n$) fournies par une pluralité de sources d'état ($S_1,...,S_n$) associées audit terminal ; et
- le calcul d'une probabilité d'état de présence agrégée (P), à partir desdites valeurs de probabilité de présence unitaire ($V_1,...,V_n$).

FIG.2

**EP 1 995 931 A2**

**Description**

La présente invention se situe dans le domaine des communications interpersonnelles numériques et concerne plus particulièrement la gestion d'informations de « présence » permettant de caractériser l'état de présence d'un utilisateur sur un ou plusieurs terminaux connectés à au moins un réseau de télécommunications.

Par la suite, le terme « informations de présence d'un utilisateur » désignera des informations relatives à la présence « physique» de cet utilisateur sur un terminal, contrairement à la présence « réseau » qui concerne la connectivité du terminal au réseau. Les informations de présence d'un utilisateur caractérisent le fait que cet utilisateur est réellement proche physiquement de son terminal ou d'un de ses terminaux, et que par conséquent cet utilisateur est physiquement disponible et joignable. Par exemple, ces informations peuvent indiquer que l'utilisateur est prêt à recevoir une communication sur un terminal donné, ou bien au contraire qu'il n'est pas joignable car il est déjà engagé dans une communication. Cet état de présence est transmis à travers le réseau, de manière à être consultable par d'autres utilisateurs, et/ou par des applications automatiques mises en oeuvre par le réseau, qui peuvent ainsi prendre connaissance de l'état de présence de cet utilisateur.

Dans l'état actuel des connaissances, différents mécanismes de gestion de l'état de présence sont utilisés pour déterminer l'état de présence d'un utilisateur sur un terminal.

Une première solution consiste à utiliser un mécanisme de présence déclarative, selon lequel on confie à l'utilisateur le soin de définir son état de présence. C'est par exemple le cas des mécanismes de présence implémentés dans le cadre des systèmes de messagerie instantanée, où l'utilisateur définit lui-même son état de présence en sélectionnant, à tout instant, un état de présence parmi un ensemble d'états de présence prédéfinis, l'état sélectionné étant affiché et éventuellement complété d'un contenu librement défini par l'utilisateur, tel qu'une chaîne de caractères ou un message textuel ou iconographique.

Toutefois, cette solution laissée entièrement à l'initiative de l'utilisateur est une méthode non fiable et considérée comme étant fastidieuse pour celui-ci, dans la mesure où il est obligé de mettre à jour manuellement son état de présence dès que celui-ci change. En effet, dans le cas par exemple où l'utilisateur est amené à s'absenter fréquemment de son terminal, il doit mettre à jour manuellement son état de présence à chaque fois qu'il quitte son terminal et/ou à chaque fois qu'il regagne son terminal.

Une deuxième solution consiste à observer l'activité générale supportée par le système physique qui renferme le système de gestion de présence. Lorsque le système de gestion de présence est un logiciel s'exécutant sur un système physique constitué par exemple par un ordinateur, il est possible, via le système d'exploitation de l'ordinateur, d'obtenir une information relativement brute sur le niveau d'activité de l'utilisateur sur l'ordinateur. Par exemple, des événements de frappe sur le clavier, des mouvements de la souris, des mouvements physiques détectés par une centrale à inertie intégrée à l'ordinateur permettent de détecter une activité de l'utilisateur sur l'ordinateur.

Par ailleurs, il est également connu d'après le concept MPOP (« Multiple Points Of Presence ») de gérer l'état de présence d'un utilisateur possédant de multiples terminaux, à partir d'informations d'état de présence fournies par ces terminaux. En particulier, le protocole XMPP (« eXtensible Messaging and Presence Protocol ») généralement mis en oeuvre dans des systèmes de messagerie instantanée, fournit un état de présence de l'utilisateur à partir d'informations d'état de présence fournies par ses terminaux. Pour cela, chaque terminal associe une valeur de priorité aux informations d'état de présence qu'il fournit. L'état de présence de l'utilisateur est alors obtenu en sélectionnant parmi l'ensemble des états de présence fournis par les terminaux, celui dont les informations de présence ont la plus forte valeur de priorité.

Cependant, le protocole XMPP ne permet pas de déterminer l'état de présence d'un utilisateur de manière fiable au cours du temps, étant donné que l'état de présence de l'utilisateur est déterminé par un simple arbitrage basé sur une priorité d'état laissée au choix du terminal.

De manière générale, les solutions décrites ci-avant, mêmes utilisées conjointement, fournissent une information de présence réduite à l'état de connexion du terminal de l'utilisateur (information de présence réseau) et non pas à une information caractérisant de manière fiable l'état de présence de l'utilisateur lui-même.

La pénibilité d'une mise à jour manuelle de l'état de présence par l'utilisateur lui-même fait qu'en pratique, l'utilisateur ne met pas régulièrement à jour ses informations de présence. De ce fait, les informations de présence affichées par le système de gestion de présence ne sont donc généralement pas fiables. Une fiabilité accrue nécessiterait une opération de mise à jour régulière de ces informations par l'utilisateur, ce qui est contraignant et fastidieux pour celui-ci.

La présente invention offre une solution qui ne présente pas les inconvénients mentionnés ci-avant, en proposant un procédé de mise à jour d'un état de présence d'un utilisateur sur au moins un terminal connecté à un réseau de télécommunications, à partir d'informations d'état de présence fournies par au moins une source d'état dudit terminal.

Conformément à la présente invention, l'état de présence de l'utilisateur est déterminé lors d'une étape d'agrégation comprenant :

- la collecte d'une pluralité de valeurs de probabilité de présence unitaire fournies par une pluralité de sources d'état associées au terminal de l'utilisateur ; et

- le calcul d'une probabilité d'état de présence agrégée, résultant d'une combinaison linéaire des valeurs de probabilité de présence unitaire.

La prise en compte d'une pluralité de valeurs de probabilité de présence unitaire pour le calcul d'une probabilité de présence agrégée permet d'obtenir une information caractérisant de manière fiable l'état de présence de l'utilisateur sur un terminal donné.

Selon une caractéristique de l'invention, les valeurs de probabilité de présence unitaire sont classées par ordre croissant de manière à former un ensemble ordonné de valeurs, avant d'être utilisées pour le calcul de la probabilité d'état de présence agrégée.

Ce classement par ordre croissant permet d'optimiser le calcul de la probabilité d'état de présence agrégée en maximisant la valeur de cette probabilité.

Selon une autre caractéristique de l'invention, la probabilité d'état de présence agrégée P associée au terminal est définie par $P = M_n$ calculée par récurrence selon la formule suivante : $M_i = M_{i-1} + 0.5 \times (V_i - M_{i-1})$, pour tout $1 \leq i \leq n$, et en prenant comme condition initiale $M_0 = 0.5$ ; où $V_i$ désigne la $i^{\text{ème}}$ valeur de la probabilité de présence unitaire prise dans ledit ensemble ordonné, et n désignant le dernier élément dudit ensemble ordonné.

Cette formule de récurrence permet de maximiser la valeur de la probabilité de présence agrégée tout en maximisant la fiabilité de l'information de l'état de présence de l'utilisateur.

Selon une autre caractéristique de l'invention, l'état de présence de l'utilisateur est déterminé à partir des probabilités d'état de présence agrégées relatives à une pluralité de terminaux de l'utilisateur connectés au réseau, de manière à déterminer le terminal sur lequel l'utilisateur a la plus grande probabilité de se trouver.

La prise en compte d'informations de présence obtenues pour une pluralité de terminaux d'un même utilisateur, permet d'améliorer encore la fiabilité de l'information relative à l'état de présence de cet utilisateur.

Selon une autre caractéristique de l'invention, les informations d'état de présence unitaire sont fournies dynamiquement, en réponse à une interrogation de l'utilisateur par au moins une source d'état associée à un terminal de l'utilisateur,

La fourniture d'informations de présence par l'utilisateur, en réponse à l'interrogation périodique effectuée par au moins une source d'état, permet de maintenir dans le temps une information fiable relative à l'état de présence de cet utilisateur. Le calcul selon l'invention est réalisé à partir d'informations collectées régulièrement, permettant ainsi de maintenir de façon fiable et optimale l'acuité de l'information d'état de présence d'un utilisateur sur un ou plusieurs terminaux.

L'invention vise également un système de mise à jour d'un état de présence d'un utilisateur sur un au moins un terminal connecté à un réseau de télécommunication, chaque terminal étant associé à au moins une source d'état destinée à fournir des informations d'état de présence dudit utilisateur.

Conformément à l'invention, le système comporte un dispositif d'agrégation de données comprenant :

- des moyens pour collecter une pluralité de valeurs de probabilité de présence unitaire fournies par une pluralité de sources d'état associées au terminal ; et
- des moyens pour calculer une probabilité d'état de présence agrégée, résultant d'une combinaison linéaire des valeurs de probabilité de présence unitaire.

Les avantages et réalisations particulières de ce système sont les mêmes que ceux associés au procédé selon l'invention, tels que décrits ci-avant.

Selon une autre caractéristique de l'invention, les moyens de calcul sont adaptés à calculer la probabilité d'état de présence agrégée $P = M_n$ associée audit terminal par récurrence selon la formule suivante :

$$M_i = M_{i-1} + 0.5 \times (V_i - M_{i-1})$$

pour tout $1 \leq i \leq n$

en prenant comme condition initiale $M_0 = 0.5$ et avec n désignant le dernier élément dudit ensemble ordonné; où $V_i$ désigne la $i^{\text{ème}}$ valeur de la probabilité de présence unitaire prise dans ledit ensemble ordonné.

Les différentes étapes du procédé selon l'invention peuvent être réalisées par des instructions de programmes informatiques.

En conséquence, l'invention vise également un programme informatique comportant des instructions pour l'exécution des étapes du procédé selon l'invention décrit ci-dessus, lorsque ce programme est exécuté par un ordinateur.

Ce programme peut utiliser n'importe quel langage de programmation et être sous la forme de code source, de code objet, ou de code intermédiaire entre code source et code objet, tel que dans une forme partiellement compilée, ou dans n'importe quelle autre forme souhaitable.

L'invention vise également un support d'enregistrement lisible par un ordinateur sur lequel est enregistré un programme informatique comprenant des instructions pour l'exécution des étapes du procédé selon l'invention décrit ci-avant.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

Par ailleurs, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé selon l'invention.

D'autres caractéristiques et avantages de l'invention ressortiront de la description suivante de modes de réalisation de l'invention, donnés à titre d'exemples non limitatifs, en référence aux dessins annexés, sur lesquels :

- la figure 1 illustre de manière schématique, un système comprenant un dispositif d'agrégation selon la présente invention ;
- la figure 2 illustre de manière schématique, un mode de réalisation du dispositif d'agrégation selon l'invention ;
- la figure 3 illustre sous forme d'organigramme, les étapes du procédé de mise à jour d'un état de présence d'un utilisateur conformément à la présente invention ; et
- la figure 4 illustre de manière schématique un mode de réalisation du système de mise à jour d'un état de présence conformément à la présente invention.

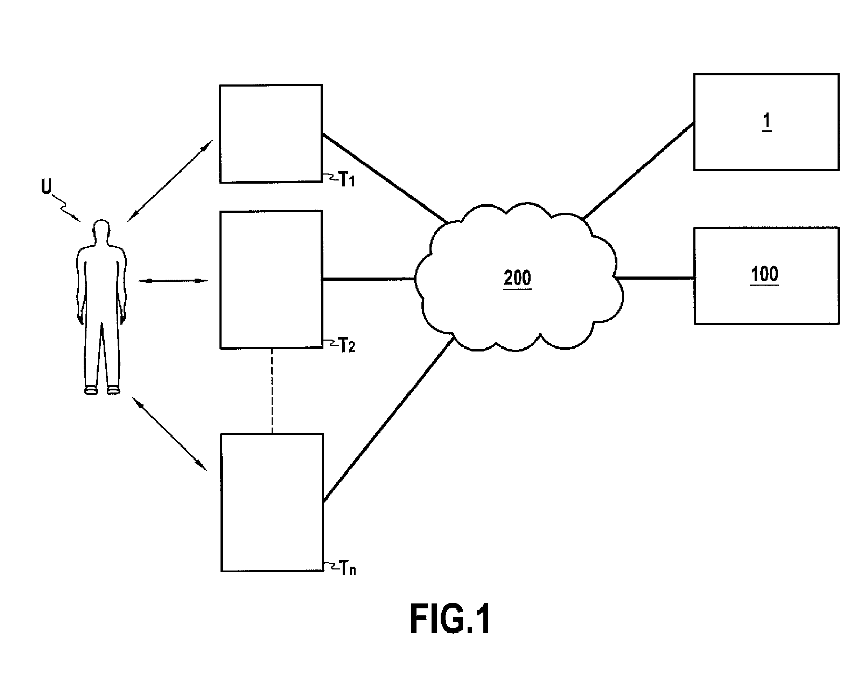

La présente invention s'applique de manière générale dans le cas où un utilisateur U possède une pluralité de terminaux $T_1,...,T_n$ connectés à un réseau 200 de télécommunication comme illustré sur la figure 1.

Un dispositif d'agrégation 100 selon l'invention dénommé par la suite agrégateur 100 est connecté au réseau 200, de manière à communiquer avec la pluralité de terminaux $T_1,...,T_n$ de l'utilisateur et avec une application exécutée sur un serveur 1. De manière connue, chaque terminal T de la pluralité de terminaux $T_1,...,T_n$ de l'utilisateur U comprend une interface réseau adaptée à communiquer avec l'agrégateur 100 via le réseau 200.

Le terminal T peut être pris parmi l'un quelconque des dispositifs suivants : un ordinateur, un PDA (« Personal Digital Assistant »), un terminal de téléphonie fixe ou mobile (GSM, UMTS), ou tout autre type de terminal apte à se connecter au réseau 200.

Le réseau 200 désigne de manière générale un réseau de communication permettant la transmission de données numériques entre l'agrégateur 100 et des terminaux d'utilisateurs. A titre d'exemple, ce réseau 200 peut être choisi parmi l'un quelconque des réseaux suivants : un réseau RNIS (Réseau Numérique à Intégration de Services), un réseau à commutation de paquets IP ou un réseau cellulaire de téléphonie sans fil (GSM, UMTS).

Un serveur 1 exécutant une application utilisatrice est apte à communiquer avec l'agrégateur 100 via le réseau 200.

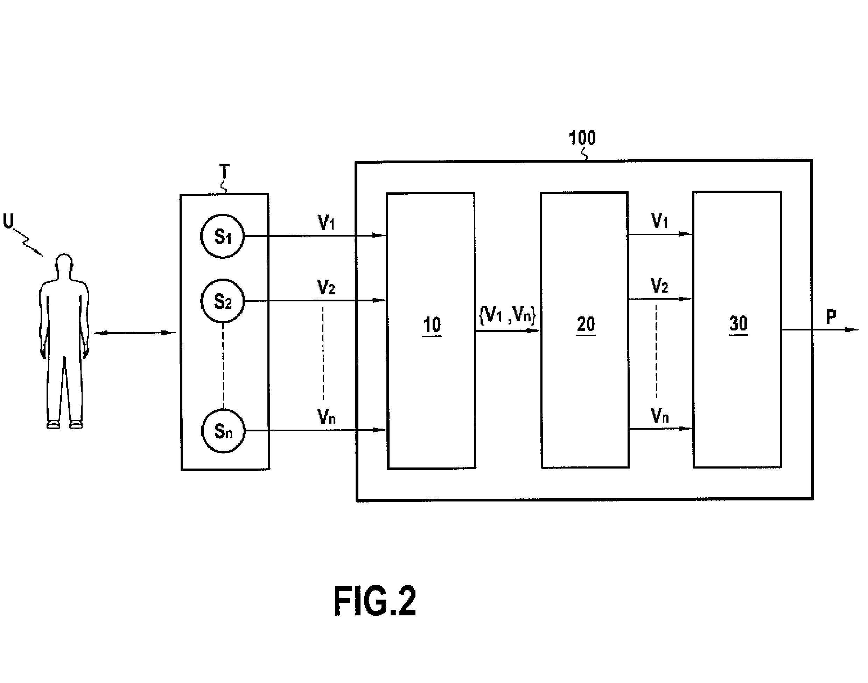

L'invention va maintenant être décrite précisément en référence à la figure 2, de manière à déterminer l'état de présence d'un utilisateur U sur un terminal T de communication quelconque.

Source d'état

Comme représenté sur la figure 2, une pluralité de sources d'état $\{S_i\}_{1\leq i \leq n}$ notées $S_1,...,S_n$ est associée au terminal T de l'utilisateur U. Par définition, une source d'état $S_i$ désignera de manière générale, un moyen logiciel et/ou hardware ou un processus informatique permettant de réaliser au moins les opérations suivantes :

- générer des informations d'état de présence de l'utilisateur U sur le terminal T auquel est associé cette source d'état $S_i$; et
- communiquer ces informations d'état de présence à l'agrégateur 100 selon l'invention via le réseau 200.

Pour simplifier, le réseau 200 n'a pas été représenté sur la figure 2, mais bien évidemment, comme décrit précédemment le terminal T communique avec l'agrégateur 100 via ce réseau 200, de manière à communiquer les informations d'état de présence à l'agrégateur 100.

Une source d'état $S_i$ associée au terminal T de l'utilisateur U peut être constituée par exemple par l'un quelconque des processus suivants :

- un processus de mise à jour déclarative effectuée par l'utilisateur U au moyen d'un client de présence permettant à cet utilisateur U de définir explicitement son état de présence sur le terminal T, cette déclaration pouvant être réalisée de manière alternative sur une interface tierce fournie sur un site web ou sur un portail vocal ;
- un processus d'observation de l'activité de l'utilisateur U sur le terminal T sur lequel le processus s'exécute, ce processus étant par exemple un processus de surveillance des périphériques (clavier, souris, webcam ou tout autre type de périphériques) permettant de détecter une activité de l'utilisateur U sur le terminal T ;
- un processus de détection de mouvement embarqué sur le terminal T permettant de détecter le déplacement de l'utilisateur U, dans le cas où le terminal T est portable ou mobile, cette détection étant par exemple réalisée au moyen d'un superviseur de mouvement par centrale inertielle ;
- un processus de surveillance de la connectivité du terminal T à un réseau sans fil, ce processus étant capable de détecter un changement d'état de connectivité du terminal T permettant d'indiquer un mouvement de l'utilisateur U (par exemple en exploitant des informations relatives à des opérations de « Roaming » dans un réseau cellulaire, telles que des événements d'entrée ou de sortie du terminal comme par exemple, des événements d'entrée/sortie du terminal d'une cellule de réseau GSM ou UMTS ; événements d'entrée/sortie en portée radio d'un réseau WiFi™ ou Bluetooth) ;
- un processus de détection et d'analyse de proximité mis en oeuvre par un équipement d'identification personnel constitué par exemple par un récepteur RFID (« Radio Frequency IDentification ») lié au terminal T, ce récepteur RFID étant apte à détecter la proximité d'un identifiant porté par l'utilisateur U et d'analyser de manière dynamique des changements d'état (par exemple, détection de l'éloignement de cet utilisateur U par rapport au récepteur RFID) ;
- un processus de détection d'activité étendue par interfaçage avec des capteurs de type domotique, capable de déterminer la présence physique de l'utilisateur U à partir de capteurs physiques positionnés dans un lieu (par exemple détection et analyses de données fournies par un capteur de présence par volumétrie, un capteur par ondes infrarouges, une webcam ou une caméra de surveillance, un compteur de passage, un détecteur d'ouverture de porte, etc...) ;
- un processus d'interrogation explicite de l'utilisateur U lui permettant de déclarer son état de présence sur le terminal T, via une requête IHM (Interface Homme-Machine) d'interrogation périodique adressée à l'utilisateur U;
- un procédé d'exploitation de données de type agenda tel que Google Calendar ou Outlook Express, qui permettent une prédiction de l'activité de l'utilisateur U;
- un procédé d'interrogation active entre différents équipements permettant de renseigner l'état de présence de l'utilisateur U, tel qu'un procédé d'échange par voie Bluetooth entre le terminal mobile T de l'utilisateur et l'ordinateur de bord d'un véhicule permettant de déterminer si l'utilisateur U est en train de conduire, auquel cas il est déduit que l'utilisateur U n'est pas disponible pour répondre à un appel téléphonique sur ton terminal mobile T.

Chaque source d'état $S_i$ est susceptible de fournir des informations d'état de présence d'utilisateur brutes ou "de base" telles que des informations d'état de présence unitaires constituées par des probabilité de présence unitaires $V_i$, ces probabilités étant obtenues à partir des processus décrits ci-dessus.

De manière optionnelle, chaque information d'état de présence unitaire $V_i$ peut être complétée par une information de type catégorielle $K_i$ relative par exemple à l'humeur, la localisation ou l'activité de l'utilisateur U. De cette manière, l'état de présence de l'utilisateur U prend en compte des paramètres additionnels configurables par cet utilisateur U ce qui permet de renseigner sur sa volonté ou sa réelle aptitude à être contacté ou à répondre à un appel.

Cette information est accompagnée d'un identifiant $ID_i$ du terminal T, qui a pour objet de préciser à quel terminal le processus de détermination d'état et par conséquent les informations d'état de présence se réfèrent. Cet identifiant $ID_i$ de terminal peut être une information statique, telle que l'adresse MAC (« Medium Access Control ») de l'interface réseau du terminal, le numéro de téléphone MSISDN (« Mobile Station Integrated Services Digital Network ») ou l'identifiant SIP-URI (« Session Initiation Protocol - Uniform Ressource Indentifier ») associé au terminal.

Par ailleurs, toute information d'état de présence est fournie avec une valeur de confiance $C_i$, qui exprime la probabilité que cet état soit avéré. Par exemple, une valeur de confiance $C_i$ égale à 100% indique que l'utilisateur est, de façon sûre, à proximité de la source d'état $S_i$.

Enfin, l'information d'état de présence fournie par une source d'état $S_i$ est complétée par une estampille temporelle $Z_i$, de sorte que les états puissent être ordonnés dans le temps pour leur analyse ultérieure.

Agrégateur

L'agrégateur 100 selon l'invention constitue un point de regroupement et de traitement des informations d'état de présence communiquées par les différentes sources d'état $S_1,...,S_n$, de manière à fournir une probabilité d'état de présence agrégée P, cette probabilité P étant calculée en fonction des informations d'états de présence unitaires fournies par l'ensemble des sources d'état $S_1,...,S_n$.

L'agrégateur 100 peut être mis en oeuvre par exemple au sein d'un serveur de présence adapté à recevoir les connexions des différentes sources d'état $S_i$.

Comme illustré sur la figure 2, l'agrégateur 100 selon l'invention comprend :

- des moyens de collecte 10 pour collecter une pluralité de valeurs de probabilité de présence unitaire $V_1,...,V_n$ fournies par les sources d'état $S_1,...,S_n$ associées au terminal T, ces informations étant transmises via le réseau 200 (non représenté);
- des moyens de classement 20 pour classer les valeurs de probabilité de présence unitaire $V_1,...,V_n$ par ordre croissant, de manière à former un ensemble ordonné E = {$V_1,...,V_n$} de valeurs de probabilités de présence unitaires, ces valeurs étant destinées à être utilisées pour le calcul de la probabilité d'état de présence agrégée (P) ;
- des moyens de calcul 30 pour calculer la probabilité d'état de présence agrégée (P), résultant d'une combinaison linéaire des valeurs de probabilité de présence unitaire {$V_1,...,V_n$} classées par ordre croissant de l'ensemble ordonné E.

De manière connue, les moyens de collecte 10, les moyens de classement 20 et les moyens de calcul 30 de l'agrégateur 100 sont constitués par des moyens logiciels mis en oeuvre sur un microprocesseur associé à un système de mémoire RAM et/ou ROM.

L'agrégateur 100 selon l'invention permet donc de maintenir un état de présence d'utilisateur pour chaque terminal, avec une probabilité de présence agrégée. Afin de maintenir un état de présence fiable dans le temps, les moyens de collecte 10 de l'agrégateur 100 sont adaptés à interroger en cas de besoin, une source d'état $S_i$, en vue d'obtenir un rafraîchissement de l'état de présence de cet utilisateur.

Plus spécifiquement, l'agrégateur 100 selon l'invention comprend des moyens pour maintenir à jour une table de présence dans laquelle sont répertoriés tous les terminaux de chaque utilisateur en association avec des informations de présence. Ces moyens de mise à jour sont constitués, par exemple, par des moyens logiciels mis en oeuvre sur un microprocesseur associé à un système de mémoire RAM et/ou ROM.

Pour chaque terminal, la table de présence stocke une probabilité de présence agrégée relative à la présence de l'utilisateur sur ce terminal ainsi qu'une sous-table décrivant toutes les sources d'état associées à ce terminal. Pour chacune de ces sources d'état, au moins les informations suivantes sont conservées dans la sous-table :

- la dernière probabilité d'état de présence unitaire transmise par chaque source; et
- la date de la dernière transmission de chaque probabilité d'état de présence unitaire.

Détermination d'un état de présence agrégé

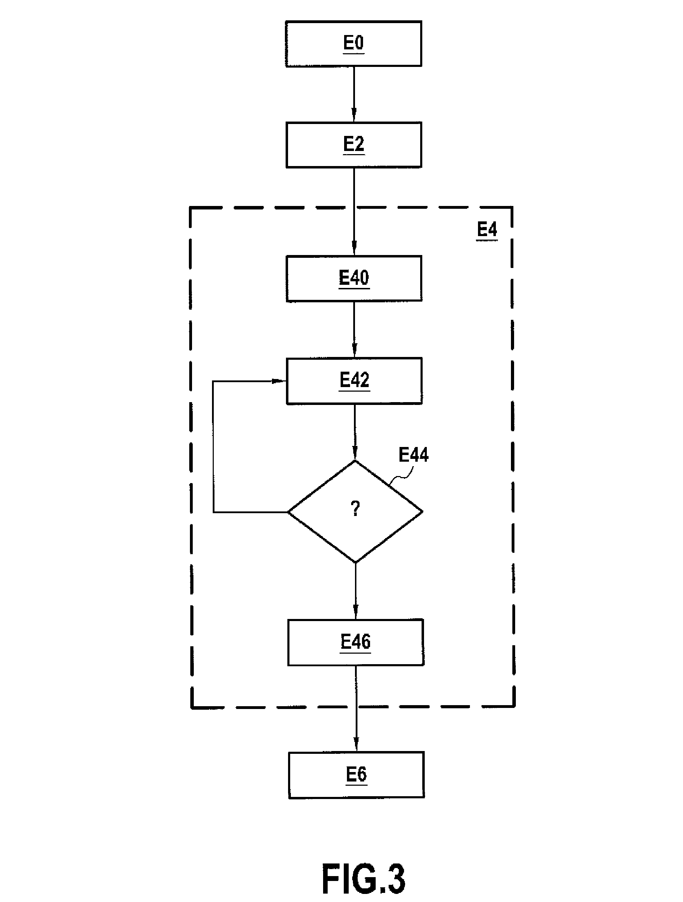

La détermination de la probabilité agrégée d'un état de présence de l'utilisateur U sur le terminal T par l'agrégateur 100 selon l'invention va être maintenant décrite de manière détaillée en référence aux figures 2 et 3. Pour chaque terminal T, la probabilité de présence agrégée P est calculée par l'agrégateur 100 selon les étapes suivantes.

Lors d'une étape initiale de collecte E0, l'agrégateur 100 selon l'invention obtient par les moyens de collecte 10, les valeurs de probabilités d'état de présence unitaires $V_i$ fournies par chaque source d'état $S_i$ associée au terminal T.

On notera que la fourniture d'informations d'état de présence par une source d'état $S_i$ à l'agrégateur 100 selon l'invention peut être opérée selon l'un quelconque des modes suivants :

- de façon asynchrone, dès lors que la source d'état $S_i$ constate une évolution de l'information d'état de présence $V_i$;
- périodiquement, si la source d'état $S_i$ fonctionne sur ce mode ; ou
- à la demande, c'est-à-dire en réponse à une demande de la part de l'agrégateur 100, qui souhaite un rafraîchissement de l'information d'état de présence $V_i$.

Une interrogation explicite de la source d'état $S_i$ est effectuée par les moyens de collecte 10 de l'agrégateur 100, dans le cas où la source d'état $S_i$ ne fournit pas son état spontanément. Dans ce cas, l'agrégateur 100 met en place un sondage de cette source d'état $S_i$ de manière périodique ou à la demande.

L'agrégateur 100 peut également interroger la source d'état $S_i$ dans le cas où les états de présence stockés dans la table de présence maintenue par l'agrégateur 100 ne permettent pas de fournir une réponse satisfaisante à une requête émise par une application tierce. Ceci est le cas par exemple lorsque la fiabilité requise dans cette requête est supérieure aux probabilités de présence agrégées. Par exemple, dans le cadre d'un service d'appels d'urgence, un appel doit aboutir immédiatement, c'est pourquoi un serveur d'appel d'urgence émet un appel uniquement vers des utilisateurs qui sont hautement joignables, c'est-à-dire qui présentent une probabilité de présence agrégée supérieure à un certain seuil exigé par ce service.

Lors d'une étape de classement E2, les moyens de classement 20 de l'agrégateur 100 selon l'invention classent par ordre croissant les valeurs de probabilité de présence unitaire $V_1,...,V_n$ de manière à former un ensemble E = {$V_1,..., V_n$} ordonné qui sera ensuite utilisé pour le calcul de la probabilité d'état de présence agrégée P.

Lors d'une étape de calcul E4, la valeur de probabilité de présence agrégée P est calculée, pour chaque terminal T, en fonction des probabilités de présence unitaires $V_i$ fournies par chaque source d'état $S_i$. Pour cela, les moyens de calcul 30 de l'agrégateur 100 calculent la probabilité d'état de présence agrégée P = $M_n$ selon la formule de récurrence suivante :

$$M_i = M_{i-1} + 0.5 \times (V_i - M_{i-1}) \quad [Eq. 1]$$

avec la condition initiale $M_0 = 0.5$ et pour tout entier naturel i tel que $1 \le i \le n$, où n est un nombre entier non nul désignant le dernier élément de l'ensemble E tel que $V_n$ = Max (E) et $V_i$ est une probabilité de présence d'état unitaire fournie par une source d'état désignant la $i^{ème}$ valeur prise dans ledit ensemble E ordonné de valeurs triées dans l'ordre croissant.

Lors d'une sous-étape d'initialisation E40, les moyens de calcul 30 réalisent l'initialisation $M_0 = 0.5$ correspondant à la condition initiale de la formule de récurrence (Eq.1).

Lors d'une sous-étape de calcul E42, les moyens de calcul 30 appliquent la formule de récurrence Eq.1, de manière à calculer $M_1 = M_0 + 0.5 \times (V_1 - M_0)$ à partir de la valeur de $M_0$ initialisée lors de la sous-étape d'initialisation E40 et de la valeur de probabilité de présence unitaire V1 préalablement obtenue lors l'étape de collecte E0.

S'il reste des éléments à traiter dans l'ensemble ordonné E (étape de test E44 positif), les moyens de calcul 30 appliquent la formule de récurrence Eq.1, de manière à calculer $M_2 = M_1 + 0.5 \times (V_2 - M_1)$ à partir de la valeur $M_1$ calculée précédemment lors de l'étape de calcul E42 (itération précédente) et de la valeur de probabilité de présence unitaire $V_2$ obtenue lors de l'étape de collecte E0.

Les étapes de calcul E42 et de test E44 sont réitérées tant qu'il reste des éléments à traiter dans l'ensemble ordonné E, c'est-à-dire tant que l'indice i reste inférieur au nombre n.

Lorsque i = n, les moyens de calcul effectuent le calcul suivant $M_n = M_{n-1} + 0.5 \times (V_n - M_{n-1})$ à partir des valeurs $V_n$ et $M_{n-1}$ préalablement calculées. Dès lors que tous les éléments de l'ensemble ordonné E ont été traités (i > n) par les moyens de calcul 30, la probabilité de présence agrégée P = $M_n$ est obtenue (sous-étape finale E46).

On notera que l'étape de calcul E4 est entreprise par les moyens de calcul 30 à la suite des étapes de collecte E0 et de classement E2 des valeurs de probabilités unitaires $V_i$ et en réponse à l'un quelconque des événements suivants :

- lors de la réception par les moyens de collecte d'une nouvelle information de présence unitaire $V_i$ en provenance d'une source d'état $S_i$;
- lors de la réception par l'agrégateur 100, d'une requête pour laquelle la probabilité de présence agrégée P est considérée comme insuffisamment précise ou insuffisamment fiable auquel cas, l'étape de calcul E4 est alors exécutée après interrogation de tout ou une partie des sources d'état et obtention d'une mise à jour de la part de ces sources lors de l'étape de collecte E0. Si la valeur précédemment calculée est en dessous du seuil de précision demandé par la requête, alors une interrogation explicite des sources peut être opérée puis un nouveau calcul fait.

On notera que les valeurs de probabilité unitaires sont classées par ordre croissant lors de l'étape de classement E2 préalablement à l'étape de calcul E4 étant donné que le calcul selon la formule ci-dessus Eq. 1 n'est pas une opérative commutative et que par convention on cherche à maximiser la probabilité de présence. L'opération du calcul n'étant pas commutative, le classement des probabilités de présence unitaires garantit des résultats cohérents, comparables entre eux. Dans cet exemple, on utilise un classement par ordre croissant qui aboutit à des valeurs de probabilité de présence supérieures qu'avec un classement par ordre décroissant.

Pour chaque terminal T, les valeurs de probabilité de présence agrégées par le calcul selon la formule ci-dessus permettent de préserver la normalisation du résultat de sorte que $0 \le P \le 1$.

Communication entre sources d'état et agrégateur

Les sources d'état $S_1,...,S_n$ communiquent avec l'agrégateur 100 selon une communication informatique qui peut être mise en oeuvre sur un réseau quelconque au moyen de protocoles de transport appropriés.

Par exemple, sur un réseau IP, le protocole SIP (« Session Initiation Protocol ») peut être utilisé, en exploitant le mode non connecté permis par l'échange de messages de type MESSAGE. Alternativement, le mécanisme de type souscription / notification permis par les messages SUBSCRIBE / NOTIFY peut également être mis en oeuvre.

Un autre protocole pourrait être XMPP (Jabber), qui autorise un mécanisme similaire ("pubsub"). Dans ce cas, de façon générique, les messages nécessaires sont les suivants :

- message émis par l'agrégateur 100 aux sources d'état, pour demander la communication d'une mise à jour de l'état de présence ;
- message émis par une source d'état à l'agrégateur 100, pour communiquer une mise à jour de l'état de présence. Les informations d'état de présence fournies par l'agrégateur 100 selon la présente invention peuvent être transmises à une application susceptible d'exploiter ces informations. Une telle application est par exemple exécutée sur le serveur 1 communicant avec l'agrégateur 100 via le réseau 200 décrit à la figure 1. Des exemples de telles applications sont décrits ci-dessous.
- DAB (« Dynamic Address Book ») : l'information de présence d'un contact dans un carnet d'adresses dynamique peut être rafraîchie lors de la consultation de la fiche détaillée de ce contact, ou sur demande explicite de l'utilisateur.
- Service Push de type « Live Info Service » : un serveur de contenu "pousse" une information mise à jour vers l'utilisateur. Pour améliorer ce service, il est souhaitable que le terminal qui reçoit l'information soit celui pour lequel la probabilité de présence de l'utilisateur est maximum. Le service peut être de surcroît paramétré par l'utilisateur, qui définit par exemple une liste des terminaux sur lesquels il souhaite recevoir ce contenu. Le serveur obtient alors des informations de présence sur chacun des terminaux de cette liste, ces informations étant fournies par l'agrégateur 100 selon la présente invention.
- Services de jeux en ligne de type « Multiplayer gaming » : un jeu massivement multi-joueurs, à univers persistant, pourra être amené à notifier un joueur d'un événement important qui requiert une intervention de sa part. Il est avantageux de faire cette notification sur le terminal où la présence de l'utilisateur est la plus probable.
- Service de routage d'appel (« Call Routing ») : en lien avec un service de joignabilité, il s'agit d'acheminer un appel vers le terminal où l'appelé est le plus susceptible de répondre.
- Service de publicité de type « Targeted Advertising ». Analogue à l'application "Live Info Service", ce service de publicité a pour objet de maximiser l'impact de la publicité tout en minimisant le désagrément causé auprès de l'utilisateur. Pour cela, un serveur de contenu publicitaire va chercher à optimiser l'envoi de l'information, sur le terminal le plus approprié, c'est-à-dire le terminal sur lequel se trouve l'utilisateur ciblé. Ceci évite un envoi non ciblé qui génère un désagrément, surtout si les terminaux sont partagés par plusieurs utilisateurs (PC par exemple).
- Services de rencontre (« Dating »). Ce type de service pourra faire usage de l'information de présence fournie par l'agrégateur 100 selon l'invention, afin d'optimiser une mise en relation entre deux membres. Par exemple, un nouvel inscrit peut choisir de communiquer son profil à un membre à condition que celui-ci soit joignable (afin de filtrer les contacts "inactifs", même si l'un ou l'autre décide finalement de ne pas donner suite).
- Service d'Appel d'Urgence où le besoin est de localiser le plus précisément et le plus rapidement possible le destinataire de l'appel d'urgence. A cet effet, l'agrégateur 100 selon l'invention permet de déterminer de manière fable sur quel terminal le destinaire a la plus forte probabilité d'être joint.
- Service de surveillance d'une personne, notifiant un surveillant dès lors que l'information de présence de la personne surveillée devient trop imprécise.

Dès lors que l'agrégateur 100 a réalisé le calcul des informations de présence agrégées, il établit une communication avec une application cliente utilisatrice destinée à exploiter ces informations de manière à fournir un service tel que décrit ci-dessus. La communication entre l'agrégateur 100 et cette application est également de type informatique, et peut exploiter les protocoles qui ont été mentionnés ci-avant. Elle est de type requête / réponse, avec des messages définis d'une façon générale comme suit :

- le message de requête est émis par l'application demandeuse de l'état de présence d'utilisateur. De manière générale, cette requête demande la fourniture d'une liste des terminaux de l'utilisateur, ordonnée par probabilités de présence décroissantes, avec la probabilité de présence pour chaque terminal. De plus la requête comporte un niveau de fiabilité minimum requis par le demandeur. Cette requête peut être utilisée pour plusieurs types de besoins tels que :

- une demande d'indication du terminal qui présente la meilleure fiabilité de présence de l'utilisateur, avec indication d'une probabilité minimale requise;
- une demande du niveau de fiabilité de présence sur un terminal donné, avec seuil minimal ;
- un choix d'un sous-ensemble de terminaux parmi ceux de l'utilisateur, en vue de maximiser les chances de le joindre.

Le message de réponse comporte la liste ordonnée par probabilité décroissante des terminaux de l'utilisateur, avec mention de chaque probabilité de présence. L'agrégateur 100 selon l'invention a pour tâche de maximiser la fiabilité de l'information, et il exploite le niveau minimum demandé par le client pour prendre ou non la décision d'interroger les sources d'état, de façon explicite.

Premier exemple

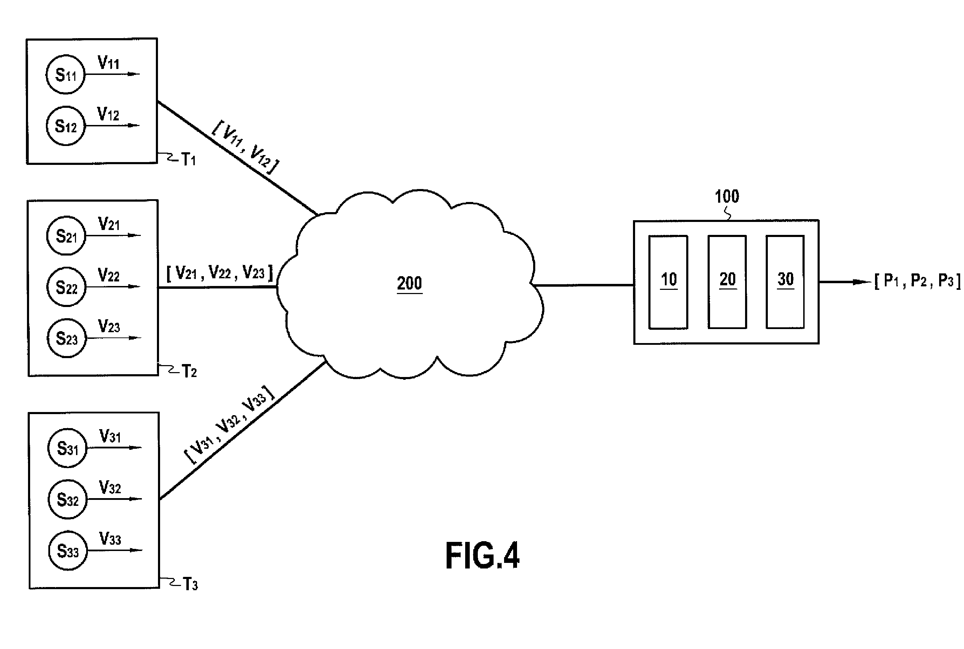

Un premier exemple de réalisation et d'utilisation de l'invention va être maintenant décrit en détail en référence à la figure 4. Dans cet exemple, on fait l'hypothèse que l'utilisateur U dispose de trois terminaux :

- un terminal fixe $T_1$ à son domicile ;
- un terminal portable $T_2$ bimode (cellulaire / WiFi) qu'il peut conserver sur lui ou poser à proximité ;
- un ordinateur fixe $T_3$ sur son lieu de travail.

A chaque terminal est associée une pluralité de sources d'état comme décrit ci-dessous.
Le terminal fixe $T_1$ de l'utilisateur U comprend les deux sources d'état suivantes :

- un superviseur $S_{12}$ de la présence réseau ; et
- un détecteur ou scanner RFID $S_{11}$, l'utilisateur disposant d'un tag RFID qu'il conserve sur lui (sous la forme par exemple d'un bracelet

ou d'un pendentif).
Le détecteur RFID $S_{11}$ est supposé détecter la présence du tag RFID porté par l'utilisateur U, sans contact, dans un rayon de quelques mètres. Le détecteur RFID $S_{11}$ génère une information d'état de présence périodique indiquant si l'utilisateur U se trouve ou non à l'intérieur de son domaine de portée radio.
Le terminal mobile $T_2$ de l'utilisateur U comprend les trois sources d'état suivantes :

- superviseur de la présence réseau $S_{23}$;
- superviseur de mouvement par centrale inertielle $S_{22}$ ;
- superviseur de Roaming réseau $S_{21}$.

La supervision de la présence réseau est fournie par le réseau d'opérateur. Celle-ci génère une indication d'état de présence dès lors que le terminal mobile $T_2$ s'enregistre auprès du réseau (avec l'identité de l'utilisateur) ou au contraire lorsque le terminal mobile $T_2$ se désenregistre.
Le superviseur de type centrale inertielle $S_{22}$ embarqué dans le terminal mobile $T_2$ génère un événement de mise à jour dès la détection d'un mouvement du terminal mobile $T_2$ (avec probablement un mécanisme d'hystérésis pour limiter la quantité de mises à jour au cours du temps).
Le superviseur de Roaming réseau $S_{21}$ génère un événement de mise à jour dès la détection d'un changement d'état lié à la connectivité du terminal mobile $T_2$. Par exemple, un changement d'état est détecté lorsque le terminal mobile $T_2$ change de cellule dans le réseau cellulaire ou lorsqu'il arrive en portée WiFi et se connecte à un réseau WiFi.
L'ordinateur $T_3$ de l'utilisateur U comprend les trois sources d'état suivantes :

- module de déclaration explicite $S_{33}$ de l'état de présence de l'utilisateur U;
- superviseur d'activité $S_{32}$ de l'utilisateur par le biais de périphériques de l'ordinateur (clavier, souris) ; et
- superviseur $S_{31}$ associé à une webcam intégrée à l'écran de l'ordinateur, capable de détecter une forme humaine devant l'écran.

Le module de déclaration explicite $S_{33}$ de la présence utilisateur, sur l'ordinateur $T_3$, offre une interface graphique qui permet à l'utilisateur U de préciser son état de présence. Ce module intègre en outre une fonction de requête asynchrone qui interroge dynamiquement l'utilisateur pour lui demander de déclarer son état de présence actuel. L'ergonomie de l'interface graphique est réalisée de telle sorte qu'elle permette une mise à jour de l'état de présence la plus simple et la rapide possible et qui soit le moins perturbant possible pour l'utilisateur. Cette requête peut être générée périodiquement ou bien ponctuellement à la demande de l'agrégateur 100. Suite à une interrogation de l'agrégateur 100, le processus décide, sur la base de son état interne, s'il répercute la demande auprès de l'utilisateur, via une requête IHM (Interface Homme-Machine) d'interrogation. Ainsi, l'utilisateur est interrogé sur son état de présence grâce au processus mis en oeuvre par le module de déclaration explicite, sans que l'utilisateur n'ait à se soucier de maintenir à jour son état de présence au cours du temps.
Le superviseur d'activité $S_{32}$ de l'utilisateur génère périodiquement un état de présence tant qu'une activité de l'utilisateur est détectée sur l'ordinateur $T_3$. Dès que l'activité s'interrompt, il met à jour avec une probabilité nulle, puis stoppe l'envoi des messages de mise à jour.

Le superviseur $S_{31}$ associé à la webcam génère de même un état de présence périodique tant qu'une forme humaine est reconnue devant l'écran de l'ordinateur $T_3$. De plus, il module la probabilité de présence $V_{31}$ en fonction du résultat fourni pas le processus de reconnaissance visuelle (taux de confiance dans la reconnaissance du visage ou de la forme humaine).

Le tableau 1 ci-dessous illustre à titre d'exemple l'état de la table de présence maintenue par l'agrégateur 100 à un instant donné $t_1$. Dans ce tableau 1, figurent la valeur courante des probabilités d'état de présence unitaires fournies par les différentes sources d'état $S_{11}$, $S_{12}$, $S_{21}$, $S_{22}$, $S_{23}$, $S_{31}$, $S_{32}$, $S_{33}$. L'ancienneté de ces valeurs est exprimée en secondes dans la colonne intitulée « Ancienneté ».

Tableau 1. Exemple du contenu de la table maintenue par l'agrégateur

| Terminal/Source d'état | | Valeur courante | Ancienneté (secondes) | Présence agrégée normalisée |
|---|---|---|---|---|
| Terminal fixe (T₁) | Superviseur présence réseau (S₁₂) | $V_{12} = 1$ | 3600 | $P_1 = 0.625$ |
| | Scanner RFID (S₁₁) | $V_{11} = 0$ | 55 | |
| Terminal mobile (T₂) | Superviseur présence réseau (S₂₃) | $V_{23} = 1$ | 600 | $P_2 = 0.9375$ |
| | Centrale inertielle (S₂₂) | $V_{22} = 1$ | 90 | |
| | Roaming réseau (S₂₁) | $V_{21} = 1$ | 8200 | |
| Ordinateur (T₃) | Module déclaration explicite (S₃₃) | $V_{33} = 1$ | 3600 | $P3 = 0.90625$ |
| | Activité davier/ souris (S₃₂) | $V_{32} = 1$ | 210 | |
| | Webcam (S₃₁) | $V_{31} = 0.75$ | 35 | |

On notera que pour chaque terminal $T_1$, $T_2$, $T_3$ dans le tableau 1, les sources d'états $S_{11}$, $S_{12}$ ; $S_{21}$, $S_{22}$, $S_{23}$; $S_{31}$, $S_{32}$, $S_{33}$ respectives ont été triées par valeurs de présence croissantes pour chaque terminal $T_1$, $T_2$, $T_3$ correspondant. Les valeurs de probabilité présence agrégée normalisée $P_1$, $P_2$, $P_3$ pour chaque terminal $T_1$, $T_2$, $T_3$ correspondant sont calculées par les moyens de calcul comme décrit précédemment en utilisant la formule de récurrence suivante :

$$M_{j\,i} = M_{j\,i-1} + 0.5 \times (V_{j\,i} - M_{j\,i-1}) \qquad [Eq.\ 2]$$

On notera que la formule ci-dessus notée Eq.2 correspond à la formule précédemment décrite Eq.1 à laquelle un indice j supplémentaire a été ajouté pour désigner les différents terminaux. Dans cet exemple, j est un entier naturel tel que $1 \leq j \leq 3$ et $M_{j0} = M_0 = 0.5$.

Pour le terminal fixe $T_1$, la valeur de probabilité de présence agrégée est $P_1 = M_{12} = 0.625$ où $M_{12}$ est obtenu conformément à la formule de récurrence décrite ci-dessus.

$N_{10} = 0.5$ (condition initiale)
$M_{11} = 0.5 \times (V_{11} + M_{10}) = 0.5 \times (0 + 0.5) = 0.25$ (1ère itération : i=1)
$M_{12} = 0.5 \times (V_{12} + M_{11}) = 0.5 \times (1 + 0.25) = 0.625$ (2ème itération : i=2)
De même pour le terminal mobile $T_2$, la valeur de probabilité de présence agrégée est $P_2 = M_{23} = 0.9375$.
$M_{20} = 0.5$ (condition initiale)
$N_{21} = 0.5 \times (V_{21} + M_{20}) = 0.5 \times (1 + 0.5) = 0.75$ (1ère itération: i=1)
$M_{22} = 0.5 \times (V_{22} + M_{21}) = 0.5 \times (1 + 0.75) = 0.875$ (2ème itération : i=2)
$M_{23} = 0.5 \times (V_{23} + M_{22}) = 0.5 \times (1 + 0.875) = 0.9375$ (3ème itération: i=3)

De même pour l'ordinateur $T_3$, la valeur de probabilité de présence agrégée est $P_3 = M_{33} = 0.90625$.

$M_{30} = 0.5$ (condition initiale)

$M_{31} = 0.5 \times (V_{31} + M_{30}) = 0.5 \times (0.75 + 0.5) = 0.625$ (1ère itération : i=1)

$M_{32} = 0.5 \times (V_{32} + M_{31}) = 0.5 \times (1 + 0.625) = 0.8125$ (2ème itération : i=2)

$M_{33} = 0.5 \times (V_{33} + M_{32}) = 0.5 \times (1 + 0.8125) = 0.90625$ (3ème itération : i=3)

Dans cet exemple, au vu des probabilités de présence agrégées, il est probable que :

- l'utilisateur soit devant son ordinateur $T_3$ mais occupé à une tâche ne générant pas d'activité sur les périphériques (visualisation d'un document par exemple) ;
- son terminal mobile $T_2$ est probablement à portée, puisqu'il l'a déplacé quelques dizaines de secondes auparavant ; et
- l'utilisateur n'est par contre pas à proximité du terminal fixe $T_1$, comme en atteste le détecteur RFID.

Deuxième exempte

L'invention va être maintenant décrite dans le cadre d'une application à un service d'appel d'urgence. Dans ce deuxième exemple, on considère que l'application utilisatrice est une application à un service d'appel d'urgence dite « application Appel d'Urgence » qui a besoin de savoir sur quel terminal ou quels terminaux elle peut joindre l'utilisateur, avec une grande fiabilité, dans le cas d'une urgence.

Dans ce deuxième exemple, pour simplifier, nous reprenons l'état courant à l'instant $t_1$ de la table de présence décrite précédemment dans le tableau 1. On fait ici l'hypothèse que l'application Appel d'Urgence opère une requête vers l'agrégateur 100, en demandant la liste complète des terminaux pour lesquels l'utilisateur U a une probabilité de présence supérieure à 95%.

A l'instant $t_1$, les états de présence agrégés pour les trois terminaux $T_1$, $T_2$, $T_3$ sont jugés insuffisamment fiables en raison des temps d'ancienneté relativement élevés (8600 secondes ; 3600 secondes), indiquant que certaines sources d'état n'ont pas récemment mis à jour leurs informations d'état de présence. De ce fait, l'agrégateur 100 lance des interrogations sur les sources qui le permettent, c'est-à-dire :

- le scanner RFID $S_{11}$ sur le terminal fixe $T_1$ ;
- le superviseur $S_{22}$ du terminal mobile $T_2$, à centrale inertielle ;
- l'observateur de roaming réseau $S_{21}$ du terminal mobile $T_2$;
- le module de déclaration explicite $S_{33}$ sur l'ordinateur $T_3$;
- le superviseur d'activité clavier/souris $S_{32}$ sur l'ordinateur $T_3$ ; et
- le superviseur associé à la webcam $S_{31}$ sur l'ordinateur $T_3$.

Lors de l'étape de collecte E0 décrite précédemment, l'agrégateur 100 obtient en réponse des interrogations adressées à ces sources d'état, de nouvelles probabilités de présence unitaires fournies par ces différentes sources d'état.

A l'issue des étapes de classement E2 et de calcul E4 déjà décrites, l'agrégateur 100 met à jour sa table de présence décrivant l'état courant à un instant t2 >t1 tel que décrit dans le tableau 2 ci-dessous :

Tableau 2. Contenu de la table dans l'agrégateur nouvellement mise à jour

| Terminal / Source d'état | | Valeur courante | Ancienneté (secondes) | Présence agrégée normalisée |
|---|---|---|---|---|
| **Terminal fixe ($T_1$)** | Superviseur présence réseau ($S_{12}$) | $V_{12} = 1$ | 3600 | $P_1 = 0.625$ |
| | Scanner RFID | $V_{11} = 0$ | 0 | |
| **Terminal mobile ($T_2$)** | Superviseur présence réseau ($S_{23}$) | $V_{23} = 1$ | 600 | $P_2 = 0.5625$ |
| | Centrale inertielle ($S_{22}$) | $V_{22} = 0$ | 0 | |
| | Roaming réseau ($S_{21}$) | $V_{21} = 0$ | 0 | |

(suite)

| Terminal / Source d'état | | Valeur courante | Ancienneté (secondes) | Présence agrégée normalisée |
|---|---|---|---|---|
| **Ordinateur ($T_3$)** | Module déclaration explicite ($S_{33}$) | $V_{33} = 1$ | 0 | $P_3 = 0.91125$ |
| | Activité clavier/ souris ($S_{32}$) | $V_{32} = 1$ | 0 | |
| | Webcam ($S_{31}$) | $V_{31} = 0.75$ | 0 | |

D'après les résultats fournis dans le tableau 2, on constate les résultats suivants :

- le scanner RFID $S_{11}$ ne détecte pas la proximité de l'utilisateur U par rapport au terminal fixe $T_1$;
- le détecteur de mouvement à centrale inertielle $S_{22}$ du terminal mobile $T_2$ conclut à l'immobilité de ce terminal mobile $T_2$;
- l'observateur de Roaming réseau $S_{21}$ du terminal mobile $T_2$ n'a pas connaissance d'un mouvement récent de ce terminal mobile $T_2$ ;
- le module de déclaration explicite $S_{33}$, sur l'ordinateur $T_3$, a reçu une réponse positive de la part d'un utilisateur humain (supposé être l'utilisateur enregistré sur cet ordinateur $T_3$) ;
- le superviseur d'activité clavier/souris $S_{32}$ a détecté une activité récente (probablement due à la demande explicite lors de laquelle l'utilisateur a été amené à utiliser la souris et/ou le clavier de l'ordinateur $T_3$) ;
- le détecteur associé à la webcam $S_{31}$ reconnaît une forme humaine avec une probabilité de présence de 75%.

D'après le tableau 2, l'agrégateur 100 ne dispose d'aucun terminal qui réponde au critère de fiabilité requis (probabilité de présence agrégée supérieure à 95%). L'agrégateur 100 retourne l'information disponible à l'application cliente, qui peut poursuivre son traitement.

En se basant sur les résultats communiqués, l'application de traitement d'urgence va contacter l'utilisateur préférentiellement sur son ordinateur $T_3$. La probabilité de présence agrégée relativement élevée relative à l'ordinateur $T_3$ laisse présager que l'utilisateur U va être en mesure de répondre à la demande. Cependant l'application demandeuse n'a pas pu obtenir une probabilité de présence agrégée suffisante en adéquation avec le seuil exigée dans sa requête.

<u>Troisième exemple</u>

La présente invention peut également s'appliquer à une application de type "Targeted advertising". Dans cet exemple d'application, on suppose que l'utilisateur est inscrit à un service de notification publicitaire ciblé qui lui permet d'être informé des promotions ou des nouveautés dans ses domaines d'intérêt. Un serveur d'informations chez le publicitaire décide de faire parvenir une telle information à l'utilisateur. Le service se veut agréable et utile, et doit donc minimiser le désagrément causé par un contact intempestif. Pour cela, le serveur d'informations contacte le service de présence et requiert un classement des terminaux de l'utilisateur, par probabilité décroissante de présence, ce classement étant fourni par l'agrégateur 100 selon l'invention.

En se basant sur les données connues du tableau 1, l'agrégateur 100 répond avec la liste ordonnée suivante : {terminal mobile $T_2$, ordinateur $T_3$, terminal fixe $T_1$}. Le service publicitaire prend alors la décision d'envoyer son contenu informatif par le biais d'un SMS, sur le terminal mobile $T_2$, qui est le terminal où l'utilisateur est le plus susceptible d'accéder à l'information.

**Revendications**

1. Procédé de mise à jour d'un état de présence d'un utilisateur sur au moins un terminal (T ; $T_1$, $T_2$, $T_3$) connecté à un réseau (200) de télécommunications, à partir d'informations d'état de présence fournies par au moins une source d'état ($S_1$,...,$S_n$ ; $S_{11}$, $S_{12}$, $S_{21}$, $S_{22}$, $S_{23}$, $S_{31}$, $S_{32}$, $S_{33}$) dudit terminal, ledit procédé étant **caractérisé en ce que** ledit état de présence est déterminé lors d'une étape d'agrégation comprenant :

   • la collecte (E0) d'une pluralité de valeurs de probabilité de présence unitaire ($V_1$,...,$V_n$; $V_{11}$, $V_{12}$, $V_{21}$, $V_{22}$, $V_{23}$, $V_{31}$, $V_{32}$, $V_{33}$) fournies par une pluralité de sources d'état ($S_1$,...,$S_n$ ; $S_{11}$, $S_{12}$, $S_{21}$, $S_{22}$, $S_{23}$, $S_{31}$, $S_{32}$, $S_{33}$) associées audit terminal (T; $T_1$, $T_2$, $T_3$); et

• le calcul (E4) d'une probabilité d'état de présence agrégée (P ; $P_1$, $P_2$, $P_3$), résultant d'une combinaison linéaire desdites valeurs de probabilité de présence unitaire ($V_1$,...,$V_n$ ; $V_{11}$, $V_{12}$, $V_{21}$, $V_{22}$, $V_{23}$, $V_{31}$, $V_{32}$, $V_{33}$).

2. Procédé selon la revendication 1, **caractérisé en ce que** lors de l'étape d'agrégation, les valeurs de probabilité de présence unitaire ($V_1$,...,$V_n$) sont classées (E40) par ordre croissant, de manière à former un ensemble ordonné (E) de valeurs, avant d'être utilisées pour le calcul de la probabilité d'état de présence agrégée (P ; $P_1$, $P_2$, $P_3$).

3. Procédé selon la revendication 2, **caractérisé en ce que** ladite probabilité d'état de présence agrégée (P ; $P_1$, $P_2$, $P_3$) associée audit terminal (T ; $T_1$, $T_2$, $T_3$) est définie par $P = M_n$ calculée par récurrence selon la formule suivante : $M_i = M_{i-1} + 0.5 \times (V_i - M_{i-1})$ avec la condition initiale $M_0 = 0.5$, où n désigne le dernier élément dudit ensemble ordonné (E) et i est un entier naturel tel que $1 \leq i \leq n$, $V_i$ désignant la $i^{ème}$ valeur de la probabilité de présence unitaire pris dans ledit ensemble ordonné (E).

4. Procédé selon l'une quelconque des revendications 1 à 3, **caractérisé en ce** l'état de présence de l'utilisateur (U) est déterminé à partir des probabilités d'état de présence agrégées ($P_1$, $P_2$, $P_3$) relatives à une pluralité de terminaux ($T_1$, $T_2$, $T_3$) dudit utilisateur (U) connectés audit réseau (200), de manière à déterminer le terminal sur lequel l'utilisateur (U) a la plus grande probabilité d'être joignable.

5. Procédé selon l'une quelconque des revendications 1 à 4, **caractérisé en ce que** lesdites informations d'état de présence sont fournies dynamiquement en réponse à une interrogation de l'utilisateur (U) par au moins une source d'état associée à un terminal de l'utilisateur (U).

6. Système de mise à jour d'un état de présence d'un utilisateur (U) sur un au moins un terminal (T) connecté à un réseau de télécommunications, chaque terminal étant associé à au moins une source d'état destinée à fournir des informations d'état de présence dudit utilisateur, ledit système étant **caractérisé en ce qu'**il comprend un dispositif d'agrégation (100) de données comprenant ;

   • des moyens pour collecter (10) une pluralité de valeurs de probabilité de présence unitaire ($V_1$,...,$V_n$) fournies par une pluralité de sources d'état ($S_1$,...,$S_n$) associées audit terminal ; et
   • des moyens pour calculer (30) une probabilité d'état de présence agrégée (P), résultant d'une combinaison linéaire desdites valeurs de probabilité de présence unitaire ($V_1$,...,$V_n$).

7. Système selon la revendication 6, **caractérisé en ce qu'**il comprend en outre des moyens pour classer (20) les valeurs de probabilité de présence unitaire ($V_1$,...,$V_n$) par ordre croissant de manière à former un ensemble ordonné (E) de valeurs destinées à être utilisées pour le calcul de la probabilité d'état de présence agrégée (P).

8. Système selon la revendication 7, **caractérisé en ce que** lesdits moyens de calcul (30) sont adaptés à calculer la probabilité d'état de présence agrégée définie par $P = M_n$ associée audit terminal par récurrence selon la formule suivante : $M_i = M_{i-1} + 0.5 \times (V_i - M_{i-1})$ pour tout $1 \leq i \leq n$ et avec la condition initiale $M_0 = 0.5$ ; où $V_i$ désigne la $i^{ème}$ valeur de la probabilité de présence unitaire prise dans ledit ensemble ordonné (E), et n désignant le dernier élément dudit ensemble ordonné.

9. Programme d'ordinateur comportant des instructions pour l'exécution des étapes du procédé selon l'une quelconque des revendications 1 à 5 lorsque ledit programme est exécuté par un ordinateur.

10. Support d'enregistrement lisible par un ordinateur sur lequel est enregistré un programme d'ordinateur comprenant des instructions pour l'exécution des étapes du procédé selon l'une quelconque des revendications 1 à 5.

**FIG.1**

FIG.2

E0

E2

E4

E40

E42

E44

?

E46

E6

# FIG.3

FIG.4

EP 1 995 931 A2